# EUROPEAN PATENT SPECIFICATION

(11) **EP 3 829 911 B1**
(45) Date of publication and mention of the grant of the patent: **14.02.2024**
(21) Application number: 19748970.1
(22) Date of filing: 30.07.2019
(51) Int. Cl.: B60K 5/12, F16C 19/00, B62K 25/04

(54) **CONNECTION JOINT BETWEEN FRAME AND MOTOR FOR MOTORCYCLE, AND RELATIVE MOTORCYCLE COMPRISING SAID CONNECTION JOINT**
VERBINDUNGSGELENK ZWISCHEN RAHMEN UND MOTOR FÜR EIN MOTORRAD UND MOTORRAD MIT DIESEM VERBINDUNGSGELENK
JOINT DE LIAISON ENTRE CADRE ET MOTEUR DESTINÉ À UNE MOTOCYCLETTE, ET MOTOCYCLETTE CORRESPONDANTE COMPRENANT LEDIT JOINT DE LIAISON

(30) Priority: 02.08.2018 IT 201800007767
(43) Date of publication of application: 09.06.2021
(73) Proprietor: Piaggio & C. S.P.A., 56025 Pontedera Pisa (IT)
(72) Inventor: RAFFAELLI, Andrea, 56025 Pontedera, Pisa (IT)
(74) Representative: Mitola, Marco
(86) International application number: PCT/IB2019/056491
(87) International publication number: WO 2020/026141

(56) References cited:
- DE-A1- 19 542 323
- GB-A- 738 837
- US-A- 3 542 146
- US-A- 6 129 374

## Description

### FIELD OF APPLICATION

The present invention relates to an improved connection joint between frame and motor for a motorcycle and the relative motorcycle comprising said connection joint.

### PRIOR ART

As is known, in motorcycles, and in particular in scooters equipped with a motor oscillating with respect to the frame, the best and almost universally adopted scheme for connecting the motor to the frame is to use a pair of connecting rods mutually at 90° on axes defined by bearings or sliding bushings.

In this way, it is ensured that the movement of the motor (and of the rear wheel) remains in the longitudinal plane of the vehicle: the extent of the movement of the motor is instead limited by at least one silentblock (typically 1 or 2) which also has the task of filtering the vibrations.

Of course, fixing the motor to the frame using 2 silent-blocks of the same stiffness as the described system does not change the vibrational behavior but the motor is not adequately countered in the yaw and roll movement by the silentblock rubber, thus significantly worsening the motorcycle's road behavior.

Furthermore, the solution with a pair of connecting rods also increases the overall dimensions of the fixing system and also imposes some limits on the positioning and conformation of the frame and the connecting rods themselves. US 3 542 146 A discloses a connection joint for a motorcycle according to the preamble of claim 1.

### DISCLOSURE OF THE INVENTION

The need of solving the drawbacks and limitations mentioned with reference to the prior art is therefore felt.

In particular, the need is felt to provide a motor-frame connection joint for motorcycles which ensures reduced costs, weight and dimensions and, at the same time, guarantees good road behavior of the motorcycle.

Such a need is met by a connection joint according to claim 1 and by a motorcycle according to claim 7.

### DESCRIPTION OF THE DRAWINGS

Further features and advantages of the present invention will appear more clearly from the following description of preferred non-limiting embodiments thereof, in which:

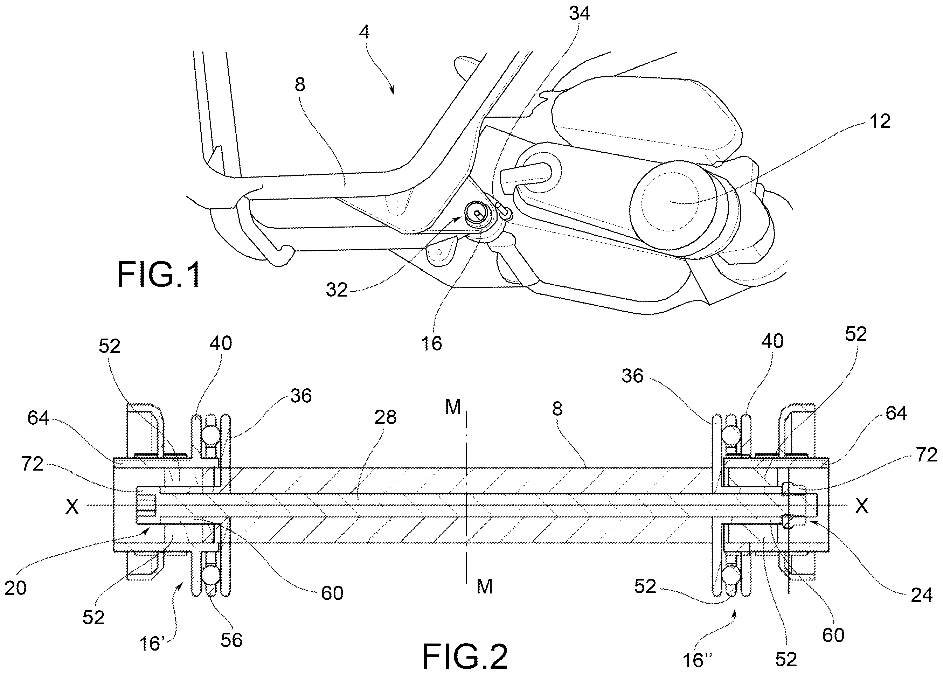

figure 1 shows a partial perspective view of a motorcycle comprising a connection joint between motor and frame according to a possible embodiment of the present invention;
figure 2 shows a sectional view of a mounting scheme of a pair of connection joints according to the present invention, on a motorcycle;

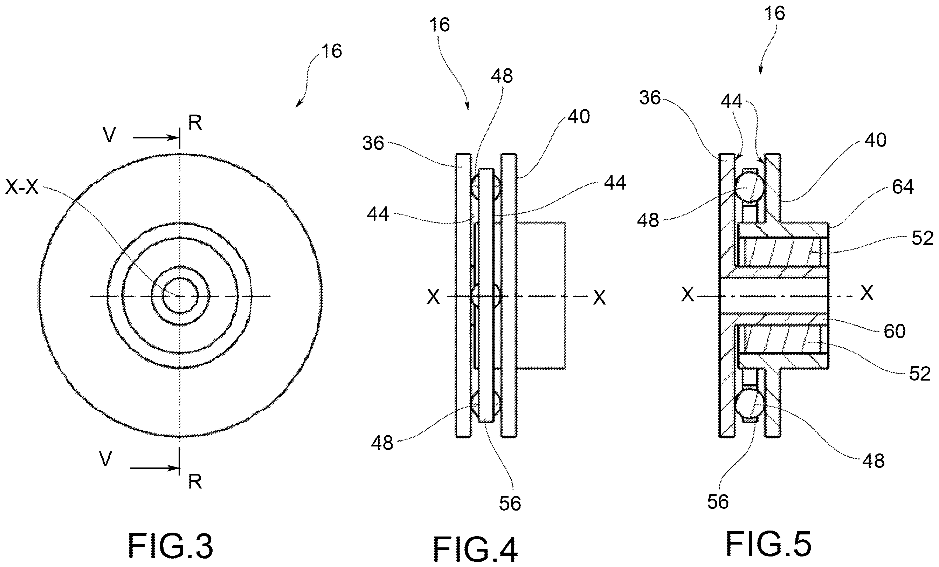

figure 3 shows a front view of a connection joint according to an embodiment of the present invention;
figure 4 shows a side view of the connection joint in figure 3;
figure 5 shows a sectional view of the connection joint in figure 3, along the section plane V- V indicated in figure 3;
figure 6 shows a sectional view of a connection joint according to a further embodiment of the present invention;
figures 7-8 show partial sectional views of the dynamic behavior of the connection joint in figure 6.

Elements or parts of elements in common to the embodiments described below are referred to with the same reference numerals.

### DETAILED DESCRIPTION

With reference to the above figures, reference numeral 4 globally indicates an overall schematic view of a motorcycle according to the present invention.

For the purposes of the present invention, it should be noted that the term motorcycle refers to any motor vehicle provided with at least two wheels, of which at least one front steering wheel and at least one rear wheel; this definition also includes three-wheeled motorcycles, with two wheels at the front or rear, and quadricycles.

The motorcycle 4 comprises a frame 8 and a motor 12 hinged to the frame 8.

For the purposes of the present invention, the type of motor 12, which can have any power, power supply (including electric motors) and displacement, and not even the type of frame 8 which can be of any architecture, geometry and material, are not relevant.

The motorcycle comprises at least one connection joint 16 arranged on the hinging of the motor 12 to the frame 8. In particular, the connection joint implements the connection between portions integral with the motor and the frame of the motor vehicle, so that the motor moves substantially on a longitudinal plane which extends along the length of the vehicle and which passes substantially through the center line of the motorized vehicle.

According to a possible embodiment, two connection joints 16', 16" are provided, respectively connected to the frame 8 and to opposite ends 20, 24 of a pin 28 inserted between the frame 8 and the connections joints 16', 16" themselves. The pin 28 serves to hinge the motor 12 to the frame 8.

The connection joint 16 is suitable for connecting together a first fixed portion 32 and a second movable portion 34, which is movable with respect to said fixed portion 32.

To this end, the connection joint 16 comprises a pair of washers 36, 40 with respective planar surfaces 44 facing each other with respect to an axial direction X-X.

The axial direction X-X identifies a direction perpendicular to said planar surfaces 44, as well as a direction parallel to a reciprocal rotation axis between the washers 36, 40 and therefore between the fixed portion 32 and the movable portion 34.

Preferably, said planar surfaces 44 are parallel to each other.

Moreover, the connection joint 16 comprises a plurality of rolling balls 48 interposed between said planar surfaces 44 of said washers 36, 40. As better described below, the portions of washers 36, 40 on which the rolling balls 48 rest should be flat to ensure absolute freedom of movement in every direction of the plane, or a pure rolling: for this reason, said planar surfaces 44 of the washers 36, 40 are provided.

In this way, the rolling balls 48 can move each having only two contact points diametrically opposed to each other, one against each corresponding planar surface 44 of a washer 36, 40.

Therefore, the rolling balls 48 allow a relative movement between the first fixed portion 32 and the second movable portion 34 in a plane parallel to said planar surfaces. Moreover, the rolling balls allow a relative rotation between the first fixed portion 32 and the second movable portion 34 around an axis of rotation perpendicular to said planar surfaces 44, and parallel to said axial direction X-X.

The connection joint 16 further comprises an elastic spacer element 52 connected to the pair of washers 36, 40 so as to space said washers 36, 40 to each other in a radial direction R-R, perpendicular to said axial direction X-X.

Preferably, the rolling balls 48 are at least partially contained in a containment cage 56, suitable for spaced apart from each other and radially containing said rolling balls 48. Preferably, said containment cage 48 is made of polyamide and/or metal. The containment cage 48 keeps the rolling balls 48 angularly spaced apart so that they never come into mutual contact with one another and can ensure a rolling friction, that is, a pure rolling between the washers 36, 40.

It should be noted that if only one of the two washers is flat with the other provided with a slot for containing the free rolling balls 48 - that is, without a containment cage 56 - there would in any case be a sliding of all the containment balls 48 in the slot because they would rest on at least 2 points. In other words, the containment balls would rest both on the side and on the bottom of the slot, preventing pure rotation which is essential to ensure that the friction is purely rolling, to limit the transmissibility of the vibrations.

Preferably, each washer 36, 40 comprises a cylindrical portion 60, 64 orthogonal to the respective planar surface 44 and said cylindrical portions 60, 64 of said washers 36, 40 are concentric with each other. The cylindrical portions 60, 64 are axial-symmetrical with respect to an axis of symmetry parallel to said axial direction X-X.

Preferably, said elastic spacer element 52 is interposed between said cylindrical portions 60, 64 of said washers 36, 40.

Preferably, the rolling balls 48 are placed radially outside the elastic spacer element 52, even if this position can be reversed.

It is preferable that the rolling balls 48 are radially external with respect to the elastic spacer element 52 so that the rolling balls work on the largest possible radius. This improves the stiffness of the connection joint 16.

Due to the fact that the rolling balls 48 are held by the containment cage 56, the latter will rest on only one point of the outer ring of the elastic spacer element 52, and therefore the condition of pure rolling is maintained.

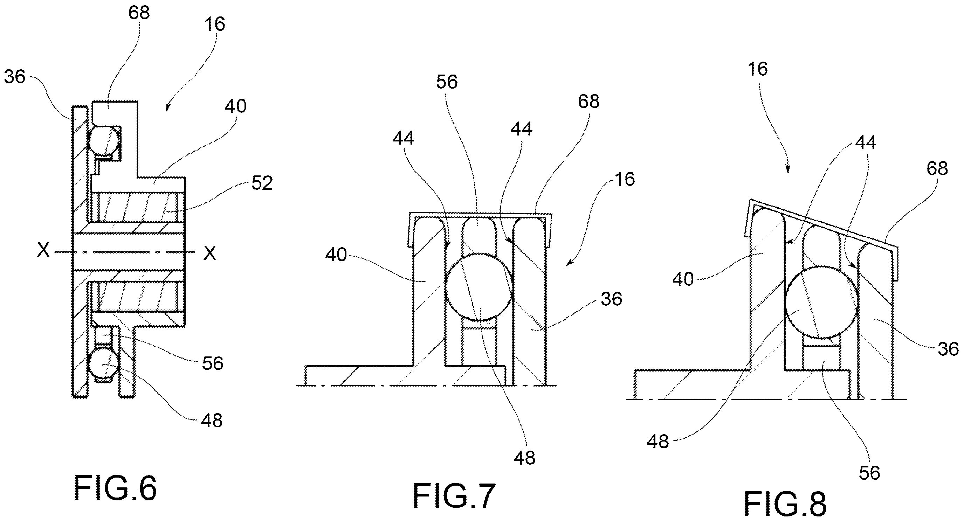

In order to improve the efficiency of the connection joint 16, the optimal situation would be that the containment cage 56 in its movements is totally free from impediments. If we imagine that a washer 36 moves by a certain value with respect to the other washer 40, the containment cage 56 which holds the balls in pure rolling will translate only by half of this value: therefore it is sufficient to implement the containment with a radial retaining ring 68, preferably of the elastic type, perimetrically fitted on said washers 36, 40 (figures 7-8) .

According to a possible embodiment, the elastic spacer element 52 is mounted with radial and/or axial preloading between said washers 36, 40. For this purpose, according to a possible embodiment, the connection joint 16 comprises a ring nut 72 for axially loading said washers 36, 40 of the connection joint 16 with respect to one another with a preloading force; said preloading force is adapted to bring said washers close together in an axial X-X and/or radial direction R-R. Alternatively, the load whereby the planes compress the rolling balls 48 can be imposed by the preload present at the time of vulcanization of the rubber of the elastic spacer element 52, or with a system with ring nuts, typically in the case of use on a scooter.

As mentioned above, in the case of application of the connection joint 16 on a motorcycle, the connection joint 16 is used to connect the motor 12 to the frame 8. For example, at least one washer 36, 40 is coupled to said pin 28.

According to an embodiment, two connection joints 16', 16" are used, wherein a washer 36, 40 of each of said connection joints is integral with the frame 8 and the other washer 40, 36 of each of said connection joints 16', 16" is integral with the pin 28.

According to a possible embodiment, said connection joints 16', 16" are mounted in a mirror-like manner with respect to a center plane M-M of said motorcycle.

The operation of a connection joint applied to a motorcycle according to the present invention shall now be described.

In particular, said motor 12 is hinged to the frame 8 by means of a pin 28 and said at least one washer 36, 40 is coupled to said pin 28 and to the motor 12, while the other washer 40, 36 is instead coupled to the frame 8.

Due to the conformation of the connection joint 16, the pair of washers 36, 40 provided with planar surfaces 44 moves in planar motion with respect to one another defining/allowing a translational movement along a first and a second direction on said planar surfaces and a rotary movement about a rotation axis substantially orthogonal to said planar surfaces 44, parallel to the axial direction X-X.

The elastic spacer element 52, associated with said washers 36, 40 with planar surfaces 44, is adapted to absorb radial loads derived from radial movements of said washers 36, 40 in a direction substantially parallel to said planar surfaces 44, with respect to one other.

The rolling balls 48, thanks to the containment cage 56, guarantee a pure rolling, i.e. rolling friction, between the planar surfaces 44 of the washers 36, 40.

As can be appreciated from the description, the present invention allows overcoming the drawbacks of the prior art.

In fact, the joint of the present invention fulfills the function of a pair of connecting rods universally used in the solutions of the prior art, with the advantage of being lighter, more cost-effective and less bulky.

Moreover, the present invention allows the elimination of the inclination between the rings of the silentblock during its deformation, and therefore a better dynamic behavior of the motorcycle, with respect to the solutions of the prior art.

Moreover, again in the case of application on scooters, the connecting rods between the motor and the frame are eliminated, thus ensuring the absence of yaw, thus improving the dynamic behavior of the vehicle.

In case of application on the motor attachment of a motorcycle on a frame, yaws of the power unit are avoided while introducing a vibrational damping.

A man skilled in the art may make several changes and adjustments to the solutions described above in order to meet specific and incidental needs, all falling within the scope of protection defined by the following claims.

## Claims

1. Connection joint (16) for a motorcycle (4) suitable for connecting together a first fixed portion (32) and a second movable portion (34) with respect to said fixed portion (32), comprising:
a pair of washers (36,40) with respective planar surfaces (44) facing each other with respect to an axial direction (X-X), **characterised by** further comprising:
a plurality of rolling balls (48) interposed between said planar surfaces (44) of said washers (36,40),
an elastic spacer element (52) connected to the pair of washers (36,40) so as to space said washers (36,40) to each other in a radial direction (R-R), perpendicular to said axial direction (X-X);
wherein the rolling balls (48) are radially external with respect to the elastic spacer element (52).

2. Connection joint (16) according to claim 1, wherein said rolling balls (48) are at least partially contained in a containment cage (56), suitable for spaced apart from each other and radially containing said rolling balls (48).

3. Connection joint (16) according to claim 1 or 2, wherein each washer (36,40) comprises a cylindrical portion (60,64) orthogonal to the respective planar surface (44) and said cylindrical portions (60,64) of said washers (36,40) are concentric with each other.

4. Connection joint (16) according to claim 3, wherein said elastic spacer element (52) is interposed between said cylindrical portions (60,64) of said washers (36,40).

5. Connection joint (16) according to any one of the preceding claims, further comprising a radial retaining ring (68), preferably of an elastic type, fitted perimetrically on said washers (36,40).

6. Connection joint (16) according to any one of the preceding claims, wherein said planar surfaces (44) are parallel to one another.

7. A motorcycle (4) comprising a frame (8) and a motor (12) hinged to the frame (8), at least one connection joint (16) according to any one of the preceding claims, wherein said connection joint (16) is arranged on the hinging point of the motor (12) to the frame (8).

8. A motorcycle (4) according to claim 7, wherein the elastic spacer element (52) is mounted with radial and / or axial preloading between said washers (36,40).

9. A motorcycle (4) according to any one of claims 7 or 8, wherein said motor (12) is hinged to the frame (8) by means of a pin (28) and said at least one washer (36,40) is coupled to said pin (28).

10. A motorcycle (4) according to any one of claims 7 to 9, comprising a ring nut (72) for axially loading said washers (36,40) of the connection joint (16) with respect to each other with a preloading force, said preloading force being adapted to bring said washers (36,40) closer together.

11. A motorcycle (4) according to any one of claims 9 to 10, wherein two connection joints (16',16") are provided, respectively connected to the frame (8) and at opposite ends (20,24) of said pin (28).

12. A motorcycle (4) according to claim 11, wherein a washer (36,40) of each of said connection joints (16',16") is integral with the frame (8) and the other washer (40,36) of each of said connection joints (16',16") is integral with the pin (28).

13. A motorcycle (4) according to claim 11 or 12, wherein said connection joints (16',16") are mounted in a mirror-like manner with respect to a center plane (M-M) of said motorcycle (4).

## Patentansprüche

1. Verbindungsgelenk (16) für ein Motorrad (4), welches dazu geeignet ist, miteinander einen ersten festen Abschnitt (32) und einen zweiten bewegbaren Abschnitt (34) bezüglich des festen Abschnitts (32) zu verbinden, umfassend:
ein Paar von Unterlegscheiben (36, 40) mit jeweiligen ebenen Flächen (44), welche bezüglich einer axialen Richtung (X-X) zueinander weisen, **dadurch gekennzeichnet, dass** es ferner umfasst:
eine Mehrzahl von Rollkugeln (48), welche zwischen den ebenen Flächen (44) der Unterlegscheiben (36, 40) eingefügt sind,
ein elastisches Abstandselement (52), welches mit dem Paar von Unterlegscheiben (36, 40) derart verbunden ist, dass die Unterlegscheiben (36, 40) zueinander in einer radialen Richtung (R-R) senkrecht zu der axialen Richtung (X-X) beabstandet sind;
wobei die Rollkugeln (48) radial extern bezüglich des elastischen Abstandselements (52) sind.

2. Verbindungsgelenk (16) nach Anspruch 1, wobei die Rollkugeln (48) wenigstens teilweise in einem Aufnahmekäfig (56) aufgenommen sind, welcher geeignet ist, sie voneinander beabstandet und radial die Rollkugeln (48) aufzunehmen.

3. Verbindungsgelenk (16) nach Anspruch 1 oder 2, wobei jede Unterlegscheibe (36, 40) einen zylindrischen Abschnitt (60, 64) umfasst, welcher orthogonal zu der entsprechenden ebenen Fläche (44) ist, und die zylindrischen Abschnitte (60, 64) der Unterlegscheiben (36, 40) konzentrisch zueinander sind.

4. Verbindungsgelenk (16) nach Anspruch 3, wobei das elastische Abstandselement (52) zwischen den zylindrischen Abschnitten (60, 64) der Unterlegscheiben (36, 40) eingefügt ist.

5. Verbindungsgelenk (16) nach einem der vorhergehenden Ansprüche, ferner umfassend einen radialen Haltering (68), vorzugsweise von einem elastischen Typ, welcher umfänglich an die Unterlagscheiben (36, 40) gepasst ist.

6. Verbindungsgelenk (16) nach einem der vorhergehenden Ansprüche, wobei die ebenen Flächen (44) parallel zueinander sind.

7. Motorrad (4), umfassend einen Rahmen (8) und einen an den Rahmen (8) angelenkten Motor (12), wenigstens ein Verbindungsgelenk (16) nach einem der vorhergehenden Ansprüche, wobei das Verbindungsgelenk (16) an dem Anlenkpunkt des Motors (12) an den Rahmen (8) angeordnet ist.

8. Motorrad (4) nach Anspruch 7, wobei das elastische Abstandselement (52) mit einer radialen und/oder axialen Vorlast zwischen den Unterlegscheiben (36, 40) montiert ist.

9. Motorrad (4) nach einem der Ansprüche 7 oder 8, wobei der Motor (12) an den Rahmen (8) mittels eines Stifts (28) angelenkt ist und die wenigstens eine Unterlegscheibe (36, 40) mit dem Stift (28) gekoppelt ist.

10. Motorrad (4) nach einem der Ansprüche 7 bis 9, umfassend eine Ringmutter (72) für ein axiales Vorbelasten der Unterlegscheiben (36, 40) des Verbindungsgelenks (16) bezüglich einander mit einer Vorbelastkraft, wobei die Vorbelastkraft dazu eingerichtet ist, die beiden Unterlegscheiben (36, 40) näher zueinander zu bringen.

11. Motorrad (4) nach einem der Ansprüche 9 bis 10, wobei zwei Verbindungsgelenke (16', 16") bereitgestellt sind, welche jeweils mit dem Rahmen (8) und an entgegengesetzten Enden (20, 24) des Stifts (28) verbunden sind.

12. Motorrad (4) nach Anspruch 11, wobei eine Unterlegscheibe (36, 40) von jedem der Verbindungsgelenke (16', 16") integral mit dem Rahmen (8) ist und die andere Unterlegscheibe (40, 36) von jedem der Verbindungsgelenke (16', 16") integral mit dem Stift (28) ist.

13. Motorrad (4) nach Anspruch 11 oder 12, wobei die Verbindungsgelenke (16', 16") in einer Spiegel-artigen Weise bezüglich einer Mittelebene (M-M) des Motorrads (4) montiert sind.

## Revendications

1. Joint de liaison (16) pour une motocyclette (4) approprié pour relier l'une à l'autre une première partie fixe (32) et une seconde partie mobile (34) par rapport à ladite partie fixe (32), comprenant :
une paire de rondelles (36, 40) avec des surfaces planes (44) respectives se faisant face l'une l'autre par rapport à une direction axiale (X-X), **caractérisé en ce qu'**il comprend en outre :
une pluralité de billes de roulement (48) interposées entre lesdites surfaces planes (44) desdites rondelles (36, 40),
un élément d'espacement élastique (52) relié à la paire de rondelles (36, 40) de manière à espacer lesdites rondelles (36, 40) l'une de l'autre dans une direction radiale (R-R), perpendiculaire à ladite direction axiale (X-X) ;
dans lequel les billes de roulement (48) sont externes radialement par rapport à l'élément d'espacement élastique (52).

2. Joint de liaison (16) selon la revendication 1, dans lequel lesdites billes de roulement (48) sont au moins partiellement contenues dans une cage de rétention (56), appropriée pour être espacée les unes des autres et contenant radialement lesdites billes de roulement (48).

3. Joint de liaison (16) selon la revendication 1 ou 2, dans lequel chaque rondelle (36, 40) comprend une partie cylindrique (60, 64) orthogonale à la surface plane (44) respective et lesdites parties cylindriques (60, 64) desdites rondelles (36, 40) sont concentriques l'une avec l'autre.

4. Joint de liaison (16) selon la revendication 3, dans lequel ledit élément d'espacement élastique (52) est interposé entre lesdites parties cylindriques (60, 64) desdites rondelles (36, 40).

5. Joint de liaison (16) selon l'une quelconque des revendications précédentes, comprenant en outre un anneau de retenue radial (68), de préférence d'un type élastique, ajusté de manière périmétrique sur lesdites rondelles (36, 40).

6. Joint de liaison (16) selon l'une quelconque des revendications précédentes, dans lequel lesdites surfaces planes (44) sont parallèles l'une à l'autre.

7. Motocyclette (4) comprenant un cadre (8) et un moteur (12) articulé sur le cadre (8), au moins un joint de liaison (16) selon l'une quelconque des revendications précédentes, dans laquelle ledit joint de liaison (16) est agencé sur le point d'articulation du moteur (12) sur le cadre (8).

8. Motocyclette (4) selon la revendication 7, dans laquelle l'élément d'espacement élastique (52) est monté avec une précharge radiale et/ou axiale entre lesdites rondelles (36, 40).

9. Motocyclette (4) selon l'une quelconque des revendications 7 ou 8, dans laquelle ledit moteur (12) est articulé sur le cadre (8) au moyen d'une goupille (28) et ladite au moins une rondelle (36, 40) est accouplée à ladite goupille (28).

10. Motocyclette (4) selon l'une quelconque des revendications 7 à 9, comprenant un écrou à oeil (72) pour charger axialement lesdites rondelles (36, 40) du joint de liaison (16) l'une par rapport à l'autre avec une force de précharge, ladite force de précharge étant adaptée pour amener lesdites rondelles (36, 40) plus près l'une de l'autre.

11. Motocyclette (4) selon l'une quelconque des revendications 9 à 10, dans laquelle deux joints de liaison (16', 16") sont fournis, reliés respectivement au cadre (8) et à des extrémités opposées (20, 24) de ladite goupille (28).

12. Motocyclette (4) selon la revendication 11, dans laquelle une rondelle (36, 40) de chacun desdits joints de liaison (16', 16") est d'un seul bloc avec le cadre (8) et l'autre rondelle (40, 36) de chacun desdits joints de liaison (16', 16") est d'un seul bloc avec la goupille (28).

13. Motocyclette (4) selon la revendication 11 ou 12, dans laquelle lesdits joints de liaison (16', 16") sont montés comme en miroir par rapport à un plan central (M-M) de ladite motocyclette (4).
